# EUROPÄISCHE PATENTSCHRIFT

(11) **EP 2 369 693 B1**
(45) Veröffentlichungstag und Bekanntmachung des Hinweises auf die Patenterteilung: **17.01.2018**
(21) Anmeldenummer: 11002442.9
(22) Anmeldetag: 24.03.2011
(51) Int. Cl.: H01R 13/66, H01R 103/00, H01R 24/76, H02G 3/14

(54) **Steckeraufnahme einer Steckdosenabdeckung**
Socket connector of a socket cover
Connecteur à douille d'une couverture de prise de courant

(30) Priorität: 26.03.2010 DE 102010013116
(43) Veröffentlichungstag der Anmeldung: 28.09.2011
(73) Patentinhaber: GIRA GIERSIEPEN GmbH & Co. KG, D-42477 Radevormwald (DE)
(72) Erfinder: Kemmann, Harald, 42555 Velbert (DE); Seifert, Roland, 59071 Hamm (DE)
(74) Vertreter: Angerhausen, Christoph

(56) Entgegenhaltungen:
- EP-A1- 2 144 339
- EP-A1- 2 161 794
- WO-A1-2008/114041
- AT-U1- 9 548
- DE-A1-102008 031 767
- DE-U1-202008 016 265
- US-A1- 2003 050 737

## Beschreibung

Die Erfindung geht aus von einer Steckeraufnahme einer Steckdosenabdeckung als einheitliches Bauteil, das in einem entsprechenden, gegebenenfalls vorhandenen Unterputz-Steckdoseneinsatz für die Gebäudeelektroinstallation zu montieren ist, wobei die Steckeraufnahme zumindest eine einen Sensor umfassende Mess- und Auswerteeinheit für die Bestimmung einer Messgröße aufweist, von der eine Funktionalität der Steckeraufnahme abgeleitet ist, die an einer Anzeige der Steckeraufnahme angezeigt oder über eine Datenübertragungseinheit für die drahtlose Kommunikation an eine externe Einheit weitergeleitet wird, und wobei die Steckeraufnahme für die Energieversorgung elektrisch leitende, kapazitive oder induktive Mittel aufweist, die Durchtrittsöffnungen der Steckeraufnahme für den Durchtritt von Steckerkontaktstiften eines aufzunehmenden Steckers beigeordnet sind. Eine derartige Steckeraufnahme ist aus der EP 2 161 794 A1 bekannt. Ähnliche Vorrichtungen beschreiben auch die US 2003/050737 A1 und die DE 10 2008 031 767 A1.

Auf dem Gebiet der Gebäudeelektroinstallation ist es gang und gäbe, Unterputz-Steckdoseneinsätze zu verbauen, welche mit weitestgehend frei gestaltbaren Steckdosenabdeckungen versehen werden können, um das äußere Erscheinungsbild der Steckdose auf diesem Wege annähernd ausschließlich den individuellen Vorstellungen eines Verbrauchers anpassen zu können.

Darüber hinaus sind aus dem Stand der Technik Steckdosen bekannt, welche über ihre ursprüngliche Funktion hinaus, standardisierte Stecker von Elektroendgeräten an das Gebäudestromnetz anzuschließen, zusätzliche Funktionen aufweisen. Die AT 009 548 U1 offenbart eine Elektro-Installationseinheit, die neben einer Unterputz-Steckdose auch ein fernsteuerbares Schalt- und/oder Reglermodul aufweist, wobei zur Nebeneinander-Anordnung der Unterputz-Steckdose und des Schalt- und/oder Reglermoduls ein gemeinsamer Abdeck- bzw. Tragrahmen vorgesehen ist, so dass das Schalt- und/oder Reglermodul zur Gänze als Oberputzmodul ausgebildet ist. Nachteilig an dieser Einheit ist jedoch, dass sie nicht in Verbindung mit gegebenenfalls bereits vorhandenen Unterputz-Steckdoseneinsätzen verwendet werden kann, sondern eines speziellen Einsatzes bedarf, der mit dem nebengelagerten Reglermodul elektrisch verbunden ist. Darüber hinaus ist die optische Beeinträchtigung durch das nebengelagerte Modul häufig unerwünscht.

Die DE 38 09 799 A1 betrifft eine steuerbare Wandsteckdose, einen Wandschalter oder ähnliches, welche als mehrkomponentiges Bauteil ausgeführt und wiederum nicht für die Verwendung in Verbindung mit einem gegebenenfalls bereits vorhandenen Unterputz-Steckdoseneinsatz gedacht sind.

Aus der DE 20 2008 016 265 U1 ist ein Unterputz-Steckdoseneinsatz bekannt, welcher in Kombination mit einem Anschluss- und/oder Steuerelement zur Erfassung der aktuell abgegebenen Leistung an einen angeschlossenen elektrischen Verbraucher dient. Es ist wiederum nachteilig, dass zur Realisierung der Überwachungsfunktion ein spezieller, nicht standardisierter Unterputz-Steckdoseneinsatz benötigt wird.

Aus der DE 295 04 491 U1 ist ein Installationsgerät für die Gebäudesystemtechnik bekannt, welches einen Unterputz-Busankoppler aufweist, der anstelle eines Unterputz-Steckdoseneinsatzes in einer Unterputzdose untergebracht werden soll.

Es ist somit die Aufgabe der Erfindung, eine Vorrichtung vorzuschlagen, die es erlaubt, unter Verwendung eines gegebenenfalls bereits vorhandenen Unterputz-Steckdoseneinsatzes eine Steckdose bereitzustellen, die über ihre Funktion, Gerätestecker an ein Gebäudestromnetz anzuschließen, hinaus, eine zusätzliche Funkionalität aufweist. Für eine möglichst einfache Montage, eventuell auch nachträglich unter Austausch einer vorhandenen funktionslosen Dekorabdeckung, sollte die vorzuschlagende Vorrichtung als einheitliches Bauteil realisiert sein und ihre Montage mit einfachsten handwerklichen Mitteln und somit auch für den Laien möglich sein. Eine Steckeraufnahme gemäß Patentanspruch 1 löst diese Aufgabe. Vorteilhafte Ausführungsformen sind Gegenstand der abhängigen Ansprüche.

Die erfindungsgemäße Steckeraufnahme zeichnet sich dadurch aus, dass der Sensor ein induktives Mittel aufweist, das in Form einer Spule ausgebildet ist, die rückwärtig eine der Durchtrittsöffnungen verlängert oder in diese eingelassen ist.

Erfindungswesentlich ist somit, dass sämtliche Komponenten, welche dazu benötigt werden, einer Steckdose eine zusätzliche Funktionalität zu verleihen, in der Steckeraufnahme selbst untergebracht sind. Besteht beispielsweise die vorhandene Steckdosenabdeckung neben der Steckeraufnahme auch aus einem Rahmen, welcher die Steckeraufnahme umgibt, so ist das Nachrüsten der erfindungsgemäßen Steckeraufnahme allein dadurch möglich, dass die vorhandene Steckeraufnahme durch eine erfindungsgemäße ersetzt wird. Häufig ist dazu lediglich das Lösen eines einzigen Befestigungsmittels, beispielsweise einer Schraube, notwendig. Es ist somit erfindungsgemäß vorgesehen, dass die vorgeschlagene Steckeraufnahme in sämtlichen Gestaltungsmerkmalen, welche für die Aufnahme bzw. Befestigung dieser auf einem entsprechenden, gegebenenfalls vorhandenen Unterputz-Steckdoseneinsatz bzw. in einem Rahmen einer Steckdosenabdeckung notwendig sind, im Vergleich zu den funktionslosen Standardabdeckungen identisch ausgeführt ist. Die erfindungsgemäße Steckeraufnahme hat somit neben der zusätzlichen Funktionalität auch den Vorteil gegenüber aus dem Stand der Technik bekannten Vorrichtungen, dass keine ästhetische Beeinträchtigung der Steckdose durch das Nachrüsten der zusätzlichen Funktion eintreten muss. Ebenso ist es mit einfachen Mitteln möglich, eine erste erfindungsgemäße Steckeraufnahme gegen eine zweite, etwa mit einer abweichenden zusätzlichen Funktionalität, auszutauschen.

Besonders bevorzugt ist, dass die Steckeraufnahme dazu ausgebildet ist, eine Leistungsmessung des an der Streckdose entnommenen Verbrauchs durchzuführen, zur Anzeige des Verbrauchs oder zur Kommunikation des gemessenen Verbrauchs an ein Gebäudesteuerungssystem. Auf diese Weise ist es beispielsweise möglich, dass die Steckdose die Funktion eines "Energiemonitors" erlangt.

Grundsätzlich soll die von der erfindungsgemäßen Steckeraufnahme bereitgestellte zusätzliche Funktionalität nicht auf bestimmte Funktionalitäten beschränkt sein. Erfindungsgemäß ist jedoch vorgesehen, dass die zusätzliche Funktionalität aus dem Messergebnis der Mess- und Auswerteeinheit abgeleitet werden kann. So ist es beispielsweise auch möglich, dass die Steckeraufnahme einen Helligkeitssensor aufweist, der die Helligkeit an der Steckdose misst, welche daraufhin an der Steckdose selbst angezeigt werden kann oder über eine Kommunikationsschnittstelle an eine externe Einheit weitergeleitet werden kann. Ebenso ist die Verwendung von Sensoren für die Ermittlung von Bewegung, der Temperatur, der Luftfeuchtigkeit, der Lautstärke in einem Raum, der Luftqualität, oder die Verwendung von RFID-Sensoren denkbar.

Bei einer besonderen Ausführungsform der Erfindung ist die Mess- und Auswerteeinheit darauf ausgelegt, ein Signal zu empfangen, auszuwerten oder weiterzuverarbeiten und gegebenenfalls weiterzuleiten. Dazu kann es zweckmäßig sein, dass der Sensor eine Antenne für den Empfang eines Funksignals umfasst. Auf Grundlage einer derartigen Ausführungsform der Erfindung ist es beispielsweise denkbar, eine Steckdosenabdeckung zu realisieren, welche das Funksignal einer mobilen Einheit empfängt, in Abhängigkeit eines Sensormessergebnisses moduliert und an eine Gebäudesystemkomponente, etwa einen Endverbraucher oder ein Gebäudesteuerungs-Bus-System, weiterleitet.

Ebenso kann die zusätzlich bereitgestellte Funktionalität darin bestehen, einen Steuerbefehl an eine Gebäudesystemkomponente, beispielsweise einen Gebäudeautomatisierungs-Bus, weiterzugeben. So ist es beispielsweise denkbar, dass die Steckeraufnahme über eine Eingabeeinheit, wie einen Taster, verfügt, über den ein Steuerbefehl etwa an eine Gebäudesystemkomponente, wie einen schaltbaren bzw. dimmbaren Unterputz-Steckdoseneinsatz weitergeleitet wird.

Gemäß einer Ausführungsform der Erfindung weist die Steckeraufnahme eine Anzeige für die Ausgabe mindestens einer von der Mess- und Auswerteeinheit bestimmten Messgröße auf. Wie bereits erwähnt, kann dies beispielsweise die von der Mess- und Auswerteeinheit bestimmte Leistungsaufnahme eines Verbrauchers, welcher an eine Steckdose mit der erfindungsgemäßen Steckeraufnahme verbunden ist, sein.

Darüber hinaus kann die vorgeschlagene Steckeraufnahme auch eine Datenübertragungseinheit für die drahtlose Kommunikation aufweisen. Ebenso ist die Verwendung einer drahtgebundenen Kommunikationseinheit denkbar. Mit Hilfe einer drahtlosen Kommunikation ist beispielsweise die Kommunikation der Steckeraufnahme mit einer mobilen Einheit der Gebäudeautomation denkbar, wobei die mobile Einheit etwa den gemessenen Sensorwert ausgibt oder die Funktion einer Fernbedienung für die Steckeraufnahme besitzt. Über eine drahtgebundene Kommunikationseinheit ist die Steckeraufnahme beispielsweise an ein Gebäudesteuerungs-Bus-System anbindbar. Ist die Steckeraufnahme für die drahtlose Datenübertragung vorgesehen und weist sie dazu eine Antenne auf, so ist es ein besonderer Vorteil der erfindungsgemäßen Steckeraufnahme, dass die Antenne an oder nahe bei der im Montagezustand der Steckeraufnahme sichtbaren Oberfläche angeordnet werden kann, wo sie eine für die Funkdatenübertragung optimale Position einnimmt.

Bei einer weiteren Ausführungsform der Erfindung weist die Datenübertragungseinheit für die drahtlose Kommunikation eine Repeaterfunktionalität für Funksignale von Gebäudesystemkomponenten im Umfeld der Steckeraufnahme auf. Diese Ausführungsform ist besonders dazu geeignet, mehrere zueinander in Funkreichweite angeordnete Steckeraufnahmen miteinander zu vernetzen und/oder diese an ein Gebäudesteuerungs-Bus-System anzubinden.

Es ist bevorzugt, dass die Mittel für die Energieversorgung zumindest einen elektrisch leitenden Kontakt aufweisen, der bei der Montage der Steckeraufnahme auf dem Unterputz-Steckdoseneinsatz mit der zumindest einen Steckdosenbuchse des Unterputz-Steckdoseneinsatzes elektrisch kontaktierbar ist. Bei dieser Ausführungsform ist der elektrische Kontakt besonders bevorzugt im Bereich der Durchtrittsöffnungen der Steckeraufnahme für den Durchtritt der Steckerkontaktstifte eines Gerätesteckers angeordnet. Besonders bevorzugt wird diese Ausführungsform dadurch realisiert, dass der elektrische leitende Kontakt eine flexible Hülse oder Lasche aufweist, welche weiterhin, gemäß der Erfindung, die erwähnte Durchtrittsöffnung der Steckeraufnahme rückwärtig, d. h. an der im Montagezustand der Steckeraufnahme dem Steckdoseneinsatz zugewandten Seite, verlängert, so dass bei eingesetztem Gerätestecker die Steckerkontaktstifte erst durch die Durchtrittsöffnungen der Steckeraufnahme, danach durch die flexible Hülse hindurch bzw. an der Lasche vorbei und schließlich in die Steckdosenbuchsen des Unterputz-Steckdoseneinsatzes eintreten.

Durch die Montage der Steckeraufnahme auf einem Unterputz-Steckdoseneinsatz wird das für die Energieversorgung vorgesehene Mittel, hier zumindest ein kapazitives oder induktives Mittel, in den Eingriffsbereich einer Steckdosenbuchse des Steckdoseneinsatzes gebracht. Es ist verständlich, dass das Ineingriffstehen der kapazitiven oder induktiven Mittel mit einer Steckdosenbuchse in Folge der Montage der Steckeraufnahme auf dem Steckdoseneinsatz entsprechend ein kapazitives oder induktives Ineingriffstehen der Mittel mit der Steckdosenbuchse bzw. einem durch diese oder eingestreckte Steckerkontaktstifte fließenden elektrischen Stroms bedeutet. Gemäß der Erfindung ist das induktive Mittel in Form einer Spule ausgebildet, welche derart angeordnet ist, dass sie rückwärtig eine Durchtrittsöffnung der Steckeraufnahme verlängert oder in diese eingelassen ist. So ist es besonders bevorzugt vorgesehen, dass die Spule bei eingesetztem Stecker um einen durch die Durchtrittsöffnung der Steckeraufnahme hindurchtretenden Steckerkontaktstift herum angeordnet ist, ohne dass sich dabei ein elektrischer Kontakt zwischen der Spule und dem Steckerkontaktstift ausbildet.

Ist für die Energieversorgung des Steckdoseneinsatzes ein induktives Mittel vorgesehen, so ist es verständlich, dass dieses nur dann zur Energieversorgung der Steckeraufnahme beitragen kann, wenn es von einem Strom durchflossen wird, das heißt ein Stecker in der Steckeraufnahme aufgenommen und der angeschlossene Verbraucher aktiviert ist. Um die Funktion der erfindungsgemäßen Steckeraufnahme zumindest zeitweise auch dann zu gewährleisten, wenn das induktive Mittel von keinem elektrischen Strom durchflossen wird, ist es gemäß einer Ausführungsform vorgesehen, dass die Steckeraufnahme über einen aufladbaren Energiespeicher verfügt. Dieser Energiespeicher kann einen Akkumulator umfassen. Bei einer besonders einfachen Ausbildung der vorbenannten Ausführungsform ist vorgesehen, dass der Energiespeicher zumindest einen Kondensator aufweist. Bevorzugt soll der Energiespeicher ebenfalls durch das induktive Mittel gespeist werden, wenn es von einem elektrischen Strom durchflossen wird.

Bei einer bevorzugten Ausführungsform der Steckeraufnahme ist die Mess- und Auswerteeinheit darauf ausgelegt, mindestens eine elektrische Größe an einer Steckdose zu bestimmen. Dies wird bevorzugt mit Hilfe eines Sensors der vorbeschriebenen Art, welcher weiter bevorzugt ein induktives Mittel aufweist, realisiert.

Bei einer besonderen Ausführungsform der Erfindung ist die Steckeraufnahme darauf ausgelegt, aus dem Stand der Technik bekannte Unterputz-Steckdoseneinsätze mit einer Sonderfunktion anzusteuern. Dies kann beispielsweise dimmbare oder schaltbare Steckdoseneinsätze betreffen. Dazu ist vorgesehen, dass die Steckeraufnahme Mittel für die Kommunikation mit beispielsweise einem schaltbaren oder dimmbaren Unterputz-Steckdoseneinsatz aufweist. Diese Ausführungsform der Erfindung ist insbesondere dazu geeignet, um in ein Gebäudeautomationssystem integriert zu werden. Dazu ist es jedoch zweckmäßig, dass die Steckeraufnahme zumindest eine Kommunikationsschnittstelle aufweist, über welche sie einen Steuerbefehl empfangen und weiterleiten kann. Diese Kommunikationsschnittstelle kann wiederum drahtlos ausgeführt sein, oder auch drahtgebunden, etwa für die Busankopplung an ein Gebäudesteuerungs-Bus-System.

Auf diese Weise ist mit der Steckeraufnahme eine fernsteuerbare Steckdose realisierbar, welche als zusätzlichen Funktionsumfang einen Schalt- und/oder Dimmvorgang des Steckdoseneinsatzes ansteuern kann. Auch diese Ausführungsform soll die erfindungswesentliche Eigenschaft aufweisen, nicht auf die Erfindung in Verbindung mit bestimmten Unterputz-Steckdoseneinsätzen beschränkt zu sein. So kann der Steckdoseneinsatz beispielsweise einen elektromechanischen und/oder einen Halbleiterschalter bzw. -dimmer aufweisen, wie zum Beispiel einen Triac-Thyristoren, Bipolartransistoren mit isolierter Gate-Elektrode und dergleichen.

Bei einer Ausführungsform der Erfindung ist vorgesehen, dass die Steckeraufnahme auf die Kommunikation mit einer mobilen Einheit für die Gebäudeautomation und/oder mit einem Gebäudesteuerung-Bus-System ausgelegt ist. Die genannte Kommunikation soll insbesondere die Kommunikation von Steuerbefehlen umfassen. So ist es beispielsweise möglich, dass die Steckeraufnahme darauf ausgelegt ist, Steuerbefehle einer mobilen Einheit zu empfangen. Genauso kann es vorgesehen sein, dass die mobile Einheit Information über den Zustand der Steckeraufnahme mit dieser kommuniziert. Besonders bevorzugt sollte die Kommunikation somit bidirektional ausgeführt sein. Eine besondere Ausführungsform sieht vor, dass die Steckeraufnahme eine Datenübertragungseinheit mit Gateway- und/oder Repeaterfunktionalität für Funksignale von Gebäudesystemkomponenten im Umfeld der Steckeraufnahme aufweist.

Gemäß einer weiteren Ausführungsform der Erfindung ist vorgesehen, dass der Sensor darauf ausgelegt ist, einen eingesteckten Stecker zu erkennen. Dieses Erkennen kann nicht nur die Bestimmung betreffen, ob irgendein Stecker in der Steckeraufnahme aufgenommen ist, sondern kann bei Bedarf auch die Identifizierung eines bestimmten Steckers umfassen. Auf diese Weise ist es beispielsweise möglich, der Steckeraufnahme und damit den ihr zugeordneten Gebäudesystemkomponenten mitzuteilen, welcher Verbraucher zu einem gegebenen Zeitpunkt an die Steckdose mit der erfindungsgemäßen Steckeraufnahme angeschlossen ist. Besonders bevorzugt soll die Identifizierung des Steckers auf Basis von RFID-Technologie basieren. Aus dem Stand der Technik sind zahlreiche programmierbare und statische RFID-Chips als auch entsprechende Lesegeräte für das Auslesen dieser bekannt. Kombiniert man beispielsweise eine solche Ausführungsform der Steckeraufnahme mit einem schaltbaren Unterputz-Steckdoseneinsatz, so ist es etwa denkbar, die Bestromung des über einen eingesteckten Stecker angeschlossenen Endverbrauchers von einem ausgelesenen RFID-Signal abhängig zu machen (On/Off, maximale Leistungsaufnahme ...). Besonders bevorzugt ist dazu der Sensor der Steckeraufnahme für das Auslesen eines RFID-Chips und die Mess- und Auswerteeinheit neben dem Auswerten des RFID-Signals auch für die Ansteuerung des schaltbaren Unterputz-Steckdoseneinsatzes in Abhängigkeit des gemessenen bzw. ausgewerteten RFID-Signals ausgelegt.

Im Folgenden werden beispielhafte Ausführungsformen der Erfindung anhand von Figuren erläutert. Dabei zeigt:
- Figur 1: eine Frontalansicht einer erfindungsgemäßen Steckeraufnahme;
- Figur 2: eine Querschnittsansicht einer ersten Ausführungsform der Erfindung;
- Figur 3: eine Detailansicht der Ausführungsform gemäß Figur 2; und
- Figur 4: eine Detailansicht einer zweiten Ausführungsform der Erfindung.

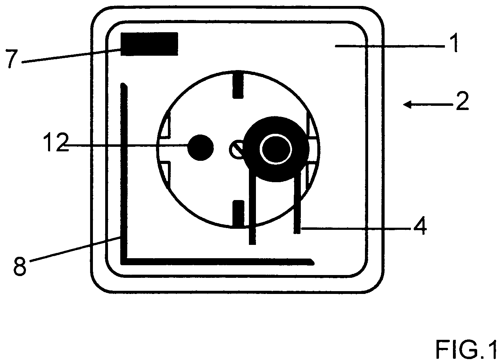

Figur 1 zeigt eine Frontalansicht einer erfindungsgemäßen Steckeraufnahme 1, wobei die Steckemufnahme 1 auch die Funktion einer Steckdosenabdeckung 2 übernimmt. Gemäß der Erfindung ist die Steckdosenabdeckung 2 einteilig ausgeführt, d. h. lediglich aus der Steckeraufnahme 1 besteht. So ist es beispielsweise denkbar, dass die Steckeraufnahme 1 von einem Rahmen umgeben ist, so dass die Steckeraufnahme 1 zusammen mit dem Rahmen die Steckdosenabdeckung 2 ausbildet.

In Figur 1 ist darüber hinaus ein Sensor 4 angedeutet, welcher induktiv ausgeführt ist und um eine Durchtrittsöffnung 12 der Steckeraufnahme 1 herum angeordnet ist. Auch wenn in der Darstellung von Figur 1 der Sensor 4 in der Draufsicht von vom auf die Steckeraufnahme 1 zu erkennen ist, soll dies nicht zwangsläufig bedeuten, dass der Sensor tatsächlich im Bereich eines vorderen Endes der Durchtrittsöffnung 12 angeordnet ist. Es ist ebenso denkbar und allein aus ästhetischen Gründen vorzuziehen, den Sensor 4 im Bereich des rückwärtigen Endes der Durchtrittsöffnung 12 anzuordnen. In der Frontalansicht ist ebenfalls die Datenübertragungseinheit 8 zu erkennen. Auch hierbei ist es zweckmäßig, dass lediglich die Antenne oder ein funktional ähnliches Mittel an der Vorderseite der Steckeraufnahme angeordnet ist, wobei die übrigen Komponenten von der Abdeckung in der Draufsicht uneinsehbar abgedeckt werden können. Die Steckeraufnahme 1 der Figur 1 zeigt darüber hinaus eine Anzeige 7, welche beispielsweise dazu vorgesehen sein kann, einen aktuellen, gemittelten oder akkumulierten Energieverbrauch anzuzeigen. Alternativ wäre es auch denkbar, die Anzeige 7 als eine Zustandsanzeige auszubilden, auf welcher beispielsweise der Stellzustand eines schaltbaren oder dimmbaren Unterputz-Steckdoseneinsatzes angezeigt wird.

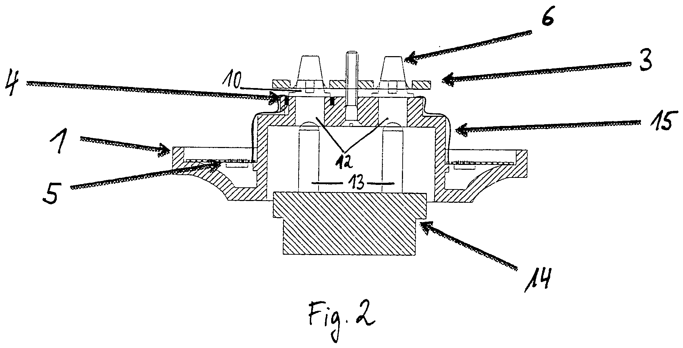

Figur 2 zeigt eine erfindungsgemäße Steckeraufnahme 1 im Querschnitt. Zur Verbesserung der Übersichtlichkeit sind ebenfalls ein Stecker 14 mit Steckerkontaktstiften 13 sowie wesentliche Bestandteile des Unterputz-Steckdoseneinsatzes 3, insbesondere dessen Steckdosenbuchsen 6, dargestellt Bei der dargestellten Ausführungsform ist die Mess- und Auswerteeinheit 5 größtenteils in einem Hohlraum angeordnet, welcher sich bei montierter Steckeraufnahme 1 zwischen dem Steckdoseneinsatz 3 und einer rückwärtigen Seite der Steckeraufnahme ausbildet. Überhaupt ist es erfindungsgemäß vorgesehen, die bei Steckeraufnahmen häufig konstruktiv oder aus technischen Gründen vorgesehenen Hohlräume für die Unterbringung erfindungswesentlicher Bestandteile, insbesondere der Mess- und Auswerteeinheit 5 oder Bestandteile dieser, vorzusehen. In der Darstellung von Figur 2 finden sich somit wesentliche Bestandteile der Mess- und Auswerteeinheit 5 in einem Hohlraum, wobei sich der Sensor selbst, im dargestellten Fall eine Induktionsspule, an einem rückwärtigen Ende der Durchtrittsöffnung 12 angeordnet ist. Darüber hinaus sind Stromversorgungsleitungen 15 für die Energieversorgung der Mess- und Auswerteeinheit 5 vorgesehen. Bei der dargestellten Ausführungsform erfolgt die Energieversorgung mit Hilfe elektrisch leitender Kontakte, welche bei der Montage der Steckeraufnahme 1 auf einem Unterputz-Steckdoseneinsatz 3 mit den beiden Steckdosenbuchsen 6 des Unterputz-Steckdoseneinsatzes 3 elektrisch kontaktiert werden. Im vorliegenden Fall ist der elektrisch leitende Kontakt in Form einer flexiblen Hülse 10 ausgeführt, welche zumindest teilweise in die Steckdosenbuchsen 6 eindringt, wenn die Steckeraufnahme 1 bei erfolgter Montage auf einem Unterputz-Steckdoseneinsatz 3 ihre Endposition erreicht. Schließlich ist zu erkennen, dass die Steckerkontaktstifte 13 des Steckers 14 beim Einsetzen des Steckers 14 in die Steckeraufnahme 1 in Vorschubrichtung zunächst durch die Durchtrittsöffnungen 12, daraufhin durch die Hülsen 10 und schließlich in die Buchsen 6 des Steckdoseneinsatzes 3 eindringen.

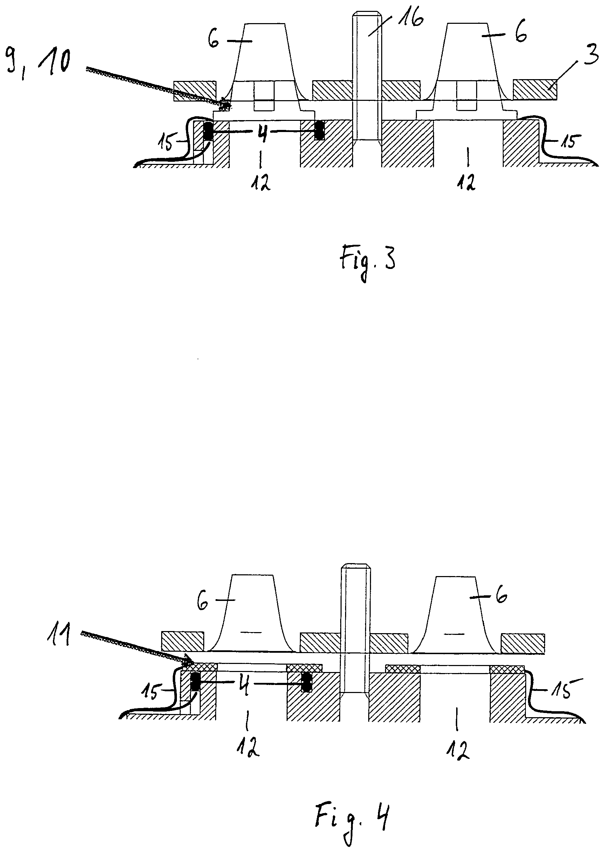

Figur 3 zeigt eine Detailansicht der Ausfübrungsform gemäß Figur 2. Wiederum zu erkennen ist, dass die Energieversorgung der Mess- und Auswerteeinheit 5 mit Hilfe eines elektrischen Kontaktes 9, welcher im Wesentlichen aus einer flexiblen Hülse 10 besteht und über Stromversorgungsleitungen 15 erfolgt. Wie in Figur 2 weist der Sensor 4 eine Spule auf, welche an einem rückwärtigen Ende der Durchtrittsöffnung 12 in die Steckeraufnahme 1 eingelassen ist. Schließlich ist noch zu erkennen, dass die mechanische Verbindung zwischen der Steckeraufnahme 1 und dem Unterputz-Steckdoseneinsatz 3 im Wesentlichen ausschließlich über ein Befestigungsmittel 16 erfolgt, vorzugsweise eine Schraube, wobei auch die in die Steckdosenbuchsen 6 eindringenden flexiblen Hülsen 10 der elektrischen Kontakte 9 zumindest formschlüssig mit den Steckdosenbuchsen 6 und damit mit dem Steckdoseneinsatz 3 verbunden sind.

Figur 4 zeigt eine alternative Ausführungsform der Energieversorgung für die Mess- und Auswerteeinheit 5. Bei dieser ist anstelle eines elektrischen Direktkontaktes zu den Steckdosenbuchsen 6 ein induktives Mittel 11 vorgesehen, welches die Durchtrittsöffnung 12 der Steckeraufnahme 1 rückwärtig verlängert. Auf diese Weise ist eine möglichst effiziente elektromagnetische Kopplung zwischen dem induktiven Mittel 11 und einem Strom, welcher durch die Steckerkontaktstifte 13 fließt, möglich. Es versteht sich, dass diese Ausführungsform bedingt, dass die Mess- und Auswerteeinheit 5 nur dann mit Energie versorgt wird, wenn ein Stecker in die Steckeraufnahme 1 eingesetzt ist und ein Strom fließt, d. h. der angeschlossene Verbraucher aktiv ist.

### BEZUGSZEICHENLISTE

- 1: Steckeraufnahme
- 2: Steckdosenabdeckung
- 3: Unterputz-Steckdoseneinsatz
- 4: Sensor
- 5: Mess- und Auswerteeinheit
- 6: Steckdosenbuchse
- 7: Anzeige
- 8: Datenübertragungseinheit
- 9: elektrisch leitender Kontakt
- 10: flexible Hülse
- 11: kapazitives oder induktives Mittel
- 12: Durchtrittsöffnung
- 13: Steckerkontaktstift
- 14: Stecker
- 15: Stromversorgungsleitung
- 16: Befestigungsmittel

## Patentansprüche

1. Steckeraufnahme (1) einer Steckdosenabdeckung (2) als einheitliches Bauteil, das in einem entsprechenden, gegebenenfalls vorhandenen Unterputz-Steckdoseneinsatz (3) für die Gebäudeelektroinstallation zu montieren ist, wobei die Steckeraufnahme (1) zumindest eine einen Sensor (4) umfassende Mess- und Auswerteeinheit (5) für die Bestimmung einer Messgröße aufweist, von der eine Funktionalität der Steckeraufnahme (1) abgeleitet ist, die an einer Anzeige (7) der Steckeraufnahme (1) angezeigt oder über eine Datenübertragungseinheit (8) für die drahtlose Kommunikation an eine externe Einheit weitergeleitet wird, und wobei die Steckeraufnahme (1) für die Energieversorgung elektrisch leitende, kapazitive oder induktive Mittel aufweist, die Durchtrittsöffnungen (12) der Steckeraufnahme (1) für den Durchtritt von Steckerkontaktstiften (13) eines aufzunehmenden Steckers (14) beigeordnet sind, **dadurch gekennzeichnet, dass** der Sensor (4) ein induktives Mittel aufweist, das in Form einer Spule ausgebildet ist, die rückwärtig eine der Durchtrittsöffnungen (12) verlängert oder in diese eingelassen ist.

2. Steckeraufnahme nach Anspruch 1, **dadurch gekennzeichnet, dass** die Steckeraufnahme für die Energieversorgung einen aufladbaren Energiespeicher aufweist.

3. Steckeraufnahme nach Anspruch 1, **dadurch gekennzeichnet, dass** die Mittel für die Energieversorgung zumindest einen elektrisch leitenden Kontakt (9) aufweisen, der bei der Montage der Steckeraufnahme (1) auf dem Unterputz-Steckdoseneinsatz (3) mit der zumindest einen Steckdosenbuchse (6) elektrisch kontaktierbar ist.

4. Steckeraufnahme nach Anspruch 1, **dadurch gekennzeichnet, dass** der elektrisch leitende Kontakt (9) eine flexible Hülse (10) oder Lasche aufweist.

5. Steckeraufnahme nach Anspruch 1, **dadurch gekennzeichnet, dass** die Mess- und Auswerteeinheit (5) darauf ausgelegt ist, mindestens eine elektrische Größe an einer Steckdose zu bestimmen.

6. Steckeraufnahme nach Anspruch 1, **dadurch gekennzeichnet, dass** sie Mittel für die Kommunikation mit einem schaltbaren oder dimmbaren Unterputz-Steckdoseneinsatz (3) aufweist.

7. Steckeraufnahme nach einem der vorangegangenen Ansprüche, **dadurch gekennzeichnet, dass** sie auf die Kommunikation mit einer mobilen Einheit für die Gebäudeautomation und/oder mit einem Gebäudesteuerungs-Bus-System ausgelegt ist.

8. Steckeraufnahme nach Anspruch 7, **dadurch gekennzeichnet, dass** sie eine Datenübertragungseinheit mit Gateway- und /oder Repeaterfiinktionalität für Funksignale von Gebäudesystemkomponenten im Umfeld der Steckeraufnahme (1) aufweist.

## Claims

1. A plug receptacle (1) of a socket cover (2) as a unitary component to be mounted in a corresponding, if necessary flush-mounted socket insert (3), for electrical installation in buildings, wherein said plug receptacle (1) has at least one measurement and evaluation unit (5) comprising a sensor (4) for determining a measurement variable, from which a functionality of the plug receptacle (1) is derived, which is displayed on a display (7) of the plug receptacle (1) or is forwarded by a data transfer unit (8) for wireless communication to an external unit, and wherein the plug receptacle (1) has, for power supply, electrically conductive, capacitive or inductive means associated with through openings (12) of the plug receptacle (1) for the passage of plug contact pins (13) of a plug (14) to be received, **characterized in that** the sensor (4) has inductive means formed as a coil, which rearwardly extends one of the through openings (12) or is inserted therein.

2. The plug receptacle as claimed in claim 1, **characterized in that** for power supply, the plug receptacle has a rechargeable energy store.

3. The plug receptacle as claimed in claim 1, characterized 'in that the means for power supply have at least one electrically, conductive contact (9) that can, during the mounting of the plug receptacle (1) on the flush-mounted socket insert (3), be electrically contacted with the at least one socket (6).

4. The plug receptacle as claimed in claim 1, **characterized in that** the electrically conductive contact (9) has a flexible sleeve (10) or lug.

5. The plug receptacle as claimed in claim 1, **characterized in that** the measurement and evaluation unit (5) is designed to determine at least one electrical variable on a socket.

6. The plug receptacle as claimed in claim 1, **characterized in that** it has means for communicating with a switchable or dimmable flush-mounted socket insert (3).

7. The plug receptacle as claimed in any one of the preceding claims, **characterized in that** it is designed for communication with a mobile unit for building automation and/or with a building control bus system.

8. The plug receptacle as claimed in claim 7, **characterized in that** it has a data transfer unit with gateway and/or repeater functionality for radio signals of building system components in the environment of the plug receptacle (1).

## Revendications

1. Support de connecteur (1) d'une protection de prise électrique (2) en tant que composant homogène, qui doit être monté dans un insert de prise électrique encastré (3) éventuel pour l'installation électrique d'un bâtiment, le support de connecteur (1) comprenant au moins une unité de mesure et d'analyse (5), comprenant un capteur (4), pour la détermination d'une grandeur de mesure, à partir de laquelle le fonctionnement du support de connecteur (1) est déduit, qui est affiché sur un affichage (7) du support de connecteur (1) ou est transmis par l'intermédiaire d'une unité de transmission de données (8) pour la communication sans fil à une unité externe et le support de connecteur (1) comprenant, pour l'alimentation en énergie, des moyens électro-conducteurs capacitifs ou inductifs, les ouvertures de passage (12) du support de connecteur (1) étant associées pour le passage de tiges de contact du connecteur (13) d'un connecteur (14) à loger, **caractérisé en ce que** le capteur (4) comprend un moyen inductif qui est conçu sous la forme d'une bobine, qui prolonge vers l'arrière une des ouvertures de passage (12) ou est insérée dans celle-ci.

2. Support de connecteur selon la revendication 1, **caractérisé en ce que** le support de connecteur comprend, pour l'alimentation en énergie, un accumulateur d'énergie rechargeable.

3. Support de connecteur selon la revendication 1, **caractérisé en ce que** les moyens pour l'alimentation en énergie comprennent au moins un contact électro-conducteur (9) qui peut être mise en contact électrique avec au moins une douille de prise électrique (6) lors du montage du support de connecteur (1) sur l'insert de prise électrique encastré (3).

4. Support de connecteur selon la revendication 1, **caractérisé en ce que** le contact électro-conducteur (9) comprend un manchon flexible (10) ou une patte.

5. Support de connecteur selon la revendication 1, **caractérisé en ce que** l'unité de mesure et d'analyse (5) est conçue pour détermine au moins une grandeur électrique au niveau d'une prise électrique.

6. Support de connecteur selon la revendication 1, **caractérisé en ce qu'**il comprend des moyens pour la communication avec un insert de prise électrique encastré (3) contrôlable ou régulable.

7. Support de connecteur selon l'une des revendications précédentes, **caractérisé en ce qu'**il est conçu pour la communication avec une unité mobile de domotique et/ou avec un système de bus de contrôle de bâtiment.

8. Support de connecteur selon la revendication 7, **caractérisé en ce qu'**il comprend une unité de transmission de données avec une fonctionnalité de passerelle et/ou de répéteur pour des signaux radio dé composants d'un système de bpatiment à proximité du support de connecteur (1).
